# FASCICULE DE BREVET EUROPEEN

(11) **EP 1 532 197 B1**
(45) Date de publication et mention de la délivrance du brevet: **13.06.2012**
(21) Numéro de dépôt: 03773828.3
(22) Date de dépôt: 25.08.2003
(51) Int. Cl.: C08J 5/12, C09D 5/44, B05D 3/14

(54) **PROCEDE DE SOUDAGE D UNE SURFACE POLYMERE AVEC UNE SURFACE CONDUCTRICE OU SEMI-CONDUCTRICE DE L'ELECTRICITE**
VERFAHREN ZUM SCHWEISSEN EINER POLYMEREN OBERFLÄCHE MIT EINER ELEKTRISCH LEITENDEN ODER HALBLEITENDEM OBERFLÄCHE
METHOD OF SOLDERING A POLYMER SURFACE WITH AN ELECTRICALLY CONDUCTIVE OR SEMICONDUCTIVE SURFACE AND APPLICATIONS OF SAME

(30) Priorité: 26.08.2002 FR 0210565
(43) Date de publication de la demande: 25.05.2005
(73) Titulaire: Commissariat à l'Énergie Atomique et aux Énergies Alternatives, 75015 Paris (FR); Alchimedics, 91300 Massy (FR)
(72) Inventeur: BUREAU, Christophe, F-92150 Suresnes (FR); CHARLIER, Julienne, F-91190 Gif-sur-Yvette (FR)
(74) Mandataire: Poulin, Gérard
(86) Numéro de dépôt international: PCT/FR2003/050037
(87) Numéro de publication internationale: WO 2004/018548

(56) Documents cités:
- EP-A- 0 761 320
- WO-A-02/098926
- DD-A- 152 573
- US-A- 5 284 543
- LOU X ET AL: "Electrografting of Preformed Aliphatic Polyesters onto Metallic Surfaces" LANGMUIR, ACS, WASHINGTON, DC, US, vol. 18, 2002, pages 2785-2788, XP002223305 ISSN: 0743-7463

## Description

### Domaine technique

La présente invention se rapporte à un procédé permettant de souder une surface polymère avec une surface conductrice ou semi-conductrice, aux applications de ce procédé ainsi qu'à des structures obtenues par sa mise en oeuvre.

Par "surface polymère", on entend une surface constituée d'un polymère et correspondant à tout ou partie de la surface d'un objet qui peut-être, soit exclusivement constitué de ce polymère, soit formé d'un ou plusieurs autres matériaux et dont au moins une partie de la surface est constituée dudit polymère. Notamment, l'objet peut être un objet comprenant une zone conductrice ou semi-conductrice de l'électricité et dont la surface est constituée d'un polymère.

Par "surface conductrice ou semi-conductrice", on entend une surface constituée d'un matériau conducteur ou semi-conducteur de l'électricité et correspondant à tout ou partie de la surface d'un objet qui peut être, soit exclusivement constitué de ce matériau conducteur ou semi-conducteur, soit formé d'un ou plusieurs autres matériaux et dont au moins une partie de la surface est constituée dudit matériau conducteur ou semi-conducteur.

Le procédé selon l'invention est bien évidemment susceptible de trouver une application dans tous les domaines où il est nécessaire de solidariser un polymère, et en particulier un polymère thermofusible, avec une surface conductrice ou semi-conductrice de l'électricité.

A titre d'exemple, on peut citer le domaine des matériaux composites tels qu'utilisés dans les industries aérospatiale, aéronautique et automobile, où le procédé selon l'invention peut permettre, par exemple, de remédier aux problèmes d'écaillage des peintures et des revêtements servant à protéger des pièces contre la corrosion. On peut également citer le domaine biomédical où le procédé selon l'invention peut être utile, par exemple, pour recouvrir du matériel médical ou chirurgical implantable comme des endoprothèses vasculaires ou "stents", des guides d'anévrisme, des guides de cathéter, des stimulateurs cardiaques, des prothèses de hanche, des électrodes d'implants cochléaires, des implants dentaires ou encore des électrodes d'électrophysiologie, par des matériaux biocompatibles propres à assurer une libération contrôlée de substances biologiquement actives.

Mais, le procédé selon l'invention peut également trouver une application dans les domaines où il est nécessaire de réaliser une fixation mécanique solide entre deux objets présentant des zones conductrices ou semi-conductrices de l'électricité, et notamment lorsque la fixation doit être effectuée au niveau de ces zones. En particulier, le procédé objet de l'invention peut présenter une grande utilité dans le cas où il est souhaitable que la fixation soit réalisée à des températures inférieures à celles nécessaires pour effectuer une soudure thermique directe, que ce soit pour des raisons techniques (comme la sensibilité des matériaux à la chaleur) ou économiques, ou encore lorsque la fixation est prévue pour se faire par l'intermédiaire d'une liaison souple. De telles contraintes sont très présentes dans l'assemblage d'éléments sensibles constitutifs des micro-systèmes comme les micro-capteurs, et en particulier dans l'assemblage réalisé par la technologie dite de "connectique par bille polymère" encore connue sous la terminologie anglo-saxonne "polymer flip chip" (PFC).

### Etat de la technique antérieure

La solidarisation d'un matériau organique, et notamment d'un polymère, avec un matériau conducteur ou semi-conducteur de l'électricité pose un certain nombre de difficultés.

En effet, les matériaux organiques présentent des états de surface localisés : en termes chimiques, on dit qu'ils possèdent des groupements fonctionnels. En ce sens, faire de la chimie sur une surface polymère est "simple" dans la mesure où il s'agit de faire réagir ensemble des groupements fonctionnels et, donc, de tirer partie de l'expérience acquise en chimie organique. Par contre, la surface des matériaux conducteurs ou semi-conducteurs est faite d'états électroniques délocalisés (en dehors des défauts de surface) : en termes chimiques, la notion même de groupements fonctionnels disparaît et on ne peut plus appliquer à la chimie de surface des matériaux conducteurs ou semi-conducteurs l'expérience acquise en chimie organique.

De ce fait, parmi les solutions proposées, il y a, en premier lieu, celles qui consistent à doter la surface du matériau conducteur ou semi-conducteur de groupements fonctionnels organiques de manière à ce que ce matériau puisse être solidarisé avec le matériau organique par une réaction chimique.

Ceci peut, par exemple, être obtenu en induisant la formation sur cette surface de couches d'oxydes ou d'hydroxydes sur lesquelles il est ensuite possible de faire réagir des groupements fonctionnels complémentaires comme des groupements isocyanates (EP-A-1 110 946 **[1]**), siloxanes (WO-A-00/51732 **[2]**) ou chlorures d'acide (FR-A-2 781 232 **[3]**), ou en utilisant des agents de couplage bi-fonctionnels ou encore des agents primaires chimiques d'adhésion tel que le γ-amino propyl triméthoxy silane (E.P. PLUEDDMANN, in FUNDAMENTALS OF ADHESION, Ed. L.H. Lee, p. 269, Plenum Press, New-York, 1990 **[4]**).

On peut également prétraiter la surface du matériau conducteur ou semi-conducteur de façon à y créer des groupements fonctionnels présentant une réactivité supérieure à celle des couches d'oxydes et hydroxydes précédemment mentionnées, en vue d'obtenir plus rapidement une réaction avec le matériau polymère. Il peut notamment s'agir de groupements fonctionnels instables, formés de façon transitoire, comme des radicaux générés par une oxydation brutale de ladite surface, soit par voie chimique, soit par irradiation.

Ainsi, par exemple, US-A-6,022,597 [5] propose d'exposer la surface à un réactif présentant des groupements générateurs d'azote (groupements azides par exemple) et de bombarder cette surface par des particules (ions, électrons, protons, ...) pour transformer les groupements générateurs d'azote en groupements nitrènes aptes à réagir ensuite avec un grand nombre de groupements fonctionnels organiques.

Le brevet US n° 6,287,687 [6] propose de fonctionnaliser une surface en lui appliquant un traitement plasma dans lequel le gaz de plasma contient un monomère susceptible de polymériser ou de co-polymériser avec d'autres composés polymérisables sous l'effet d'une irradiation.

Le brevet US n° 4,421,569 **[7]** prévoit, lui, de fonctionnaliser une surface en y appliquant une suspension aqueuse comprenant un monomère précurseur d'un polymère, un prépolymère, des sels métalliques et un catalyseur, les sels métalliques servant à oxyder ladite surface de manière à y créer des radicaux susceptibles d'initier les réactions de polymérisation du monomère et du prépolymère.

La surface du matériau conducteur ou semi-conducteur peut encore être fonctionnalisée par l'intermédiaire de radicaux que l'on fait réagir par irradiation aux ions lourds (US-A-6,306,975 **[8]**), par voie thermique (WO-A-98/49206 **[9]**) ou encore par voie photochimique comme décrit dans WO-A-99/16907 **[10].**

Tous ces procédés reposent sur la volonté de créer des liaisons chimiques les plus fortes possibles et, notamment, des liaisons covalentes à l'interface matériau organique/matériau conducteur ou semi-conducteur. D'une manière générale, ils présentent le double inconvénient d'utiliser des réactifs chimiques et/ou des opérations d'activation complexes et coûteuses, et d'exiger une optimisation de protocoles opératoires souvent longs, les réactions chimiques de surface se produisant, en effet, à des vitesses notablement plus faibles que leurs équivalents en solution.

Par ailleurs, les procédés mettant en oeuvre des réactions de polymérisation initiées à partir de la surface d'un matériau ne permettent pas d'évacuer, en fin de réaction, les initiateurs, ni certains monomères n'ayant pas réagi. Or, nombre de ces composés sont toxiques, parce que réactifs, ce qui rend ce type de procédés impropre à une utilisation dans le domaine biomédical.

De plus, dans la mesure où le matériau devant être fixé sur les groupements fonctionnels promus à la surface du matériau conducteur ou semi-conducteur joue lui-même le rôle de réactif chimique, il est souvent nécessaire de le modifier chimiquement pour lui adjoindre des groupements complémentaires à ceux présents sur ladite surface, ce qui ajoute encore, aux protocoles opératoires, au moins une étape supplémentaire et en grève sensiblement le coût.

Un autre type de solutions consiste, non plus à créer des liaisons chimiques à l'interface matériau organique/matériau conducteur ou semi-conducteur, mais à former, sur la surface conductrice ou semi-conductrice, une couche du matériau organique qui soit insoluble dans la plupart des solvants connus, en tablant sur le fait que les forces physiques en présence sont suffisantes pour garantir l'adhésion de ce matériau organique sur ladite surface, pour autant que l'interface soit stable.

Ceci peut être obtenu notamment en réticulant le matériau organique pendant ou après son dépôt sur la surface du matériau conducteur ou semi-conducteur, ce dépôt pouvant être effectué par centrifugation ou "spin-coating", ou par trempage ou "dip-coating".

Cette voie est utilisée dans le domaine biomédical, par exemple pour recouvrir des stents par des réservoirs polymériques de molécules actives, qui sont ensuite stabilisés par réticulation de fibrine (EP-A-0 701 802 **[11]**) ou d'un agent chimique de réticulation (WO-A-98/32474 **[12]**), ainsi que dans le domaine des micro-systèmes pour réaliser des plots de polymères servant à l'assemblage mécanique de micro-structures par la technologie PFC, ou encore à l'encapsulation de micro-systèmes (US-A-6,335,571 **[13]**).

Cependant, elle présente l'inconvénient majeur d'aboutir, du fait de l'absence de liaisons d'interface entre le matériau organique et le matériau conducteur ou semi-conducteur, à des assemblages qui sont mécaniquement peu solides, surtout lorsqu'ils sont soumis à des contraintes du type vibrations, torsions ou analogues, en particulier au niveau de l'interface matériau organique/matériau conducteur ou semi-conducteur.

Même si la technologie PFC se développe considérablement, de nombreux assemblages sont encore réalisés par la technologie dite de "connectique par bille d'indium" ou "flip chip", qui utilise des billes fusibles métalliques à base de plomb et d'indium (FR-A-2 780 200 [14]). Ce type d'assemblages nécessite en général des températures de soudure élevées et produit également des jonctions mécaniquement fragiles parce que cassables sous contraintes.

Enfin, il convient de souligner que, dans le cas de l'assemblage de micro-structures, aucun des procédés ci-dessus évoqués n'est adapté à une utilisation sur des zones conductrices ou semi-conductrices restreintes. En effet, qu'il s'agisse d'une fixation par l'intermédiaire de réactions chimiques de surface, de polymères réticulés ou de billes fusibles, il est nécessaire de recourir dans tous les cas, lors d'au moins une étape, à un procédé de dépôt conforme à la topologie des zones conductrices ou semi-conductrices comme l'utilisation de robots dispenseurs aptes à venir pipeter à l'endroit voulu une solution de polymère ou encore des opérations d'ablation par laser propres à enlever de la surface une couche de polymère ayant été déposée de manière uniforme.

On connaît également par US-A-5,284,543 **[16]** un procédé permettant de préparer un matériau composite constitué d'un film élastomère lié à un matériau de base. Ce procédé comprend la formation sur la surface du matériau de base d'un film polymère par polymérisation d'un monomère de typé hydrocarbure au moyen d'un plasma basse pression, puis le collage d'une composition élastomère sur le film polymère par mise en contact de cette composition et de ce film et application de pression et de chaleur.

Enfin, il a été proposé dans Lou et al. (Langmuir, 18, p. 2785-2788, 2002 **[17]**) et dans WO-A-02/098926 **[18]**, qui n'est opposable à la présente invention qu'au titre de l'Article 54(3) CBE 1973, de revêtir un substrat métallique d'un film de polychlorure de vinyle (PVC) en électro-greffant sur ce substrat un polymère préformé de 4-(acryloyloxy)-ε-caprolactone (ACL) ou de 4-(acryloyloxy)-ε-caprolactone/ε-caprolactone (ACL-co-ACL), puis en formant le film de polychlorure de vinyle par la technique de dépôt à la tournette sur le polymère ainsi électro-greffé.

Il résulte de ce qui précède qu'il existe un réel besoin de disposer d'un procédé qui permette de fixer solidement un matériau polymère à une surface conductrice ou semi-conductrice tout en étant exempt des inconvénients présentés par les différents procédés proposés à ce jour pour réaliser une telle fixation.

### Exposé de l'invention

La présente invention permet de répondre à ce besoin en fournissant un procédé de soudage de deux objects dont l'un comporte une surface polymère et l'autre comporte une surface conductrice ou semi-conductrice de l'electricité, lequel procédé est caractérisé en ce qu'il comprend :
a) l'électro-greffage d'un film organique sur la surface conductrice ou semi-conductrice, puis
b) une opération de soudage de la surface polymère avec la surface conductrice ou semi-conductrice ainsi greffée.

Au sens de la présente invention, on entend par "électro-greffage" d'un film organique sur une surface conductrice ou semi-conductrice, une opération qui consiste à mettre cette surface au contact d'au moins un précurseur de ce film organique et à induire, par application sur la surface conductrice ou semi-conductrice d'un ou plusieurs balayages de potentiel électrique, l'accrochage par liaisons covalentes de ce précurseur à ladite surface et, partant, la formation d'un film organique.

L'accrochage du précurseur sur la surface conductrice ou semi-conductrice peut, lorsque ce dernier s'y prête, s'accompagner de réactions de polymérisation dudit précurseur qui ont notamment pour effet d'augmenter l'épaisseur dudit film organique.

Par ailleurs, on entend par "opération de soudage" d'une surface polymère avec une surface conductrice ou semi-conductrice, une opération qui consiste à solidariser ces deux surfaces de manière à ce qu'elles forment une masse indivise.

Comme décrit ultérieurement, cette opération peut aussi bien être exécutée à froid, par exemple au moyen d'une substance apte à dissoudre ou à gonfler la surface polymère et le film organique électro-greffé sur la surface conductrice ou semi-conductrice - ce type d'opération étant désigné dans ce qui suit par le terme "collage" - qu'à chaud, c'est-à-dire par un apport d'énergie thermique propre à provoquer la fusion des surfaces en présence - ce type d'opération étant appelé dans ce qui suit "thermofusion", voire en combinant un collage et une thermofusion.

Avant de procéder à cette opération de soudage, le procédé selon l'invention prévoit de soumettre la surface conductrice ou semi-conductrice à un prétraitement, lequel consiste en un électro-greffage d'un film organique, le film ainsi électro-greffé présentant le double avantage d'être très adhérent à la surface qui lui a donné naissance, et d'être organique comme la surface polymère devant être solidarisée avec la surface conductrice ou semi-conductrice.

De fait, bien que l'épaisseur de ce film soit généralement faible à très faible (c'est-à-dire inférieure à 1 µm, voire à 500 nm), il s'avère que, de manière surprenante, il est apte à servir de "germe" de soudage et à permettre la réalisation d'une soudure entre la surface conductrice ou semi-conductrice et une surface polymère, par simple contact de ces dernières et application de conditions de soudure.

Ainsi, alors qu'il est impossible d'ordinaire de souder un matériau polymère avec un matériau conducteur ou semi-conducteur, compte tenu de leur différence de nature et, partant, de températures de fusion, de contraintes de collage, ..., un tel soudage est rendu possible par le procédé selon l'invention grâce à une modification préalable de la surface du matériau conducteur ou semi-conducteur, cette modification consistant en un électro-greffage d'un film organique.

Conformément à l'invention, l'électro-greffage du film organique sur la surface conductrice ou semi-conductrice peut être un greffage électro-initié ou un dépôt électro-suivi, auquel cas le film organique est un film polymère.

Dans le cas d'un greffage électro-initié, seul l'accrochage du précurseur sur la surface conductrice ou semi-conductrice résulte d'une réaction électro-chimique, c'est-à-dire d'une réaction provoquée par l'application du potentiel électrique, les réactions de polymérisation de ce précurseur étant - lorsqu'elles existent - purement chimiques, autonomes et indépendantes de tout potentiel électrique.

Alors que, dans le cas d'un dépôt électro-suivi, les réactions de polymérisation du précurseur sont électro-chimiques comme l'accrochage de ce précurseur sur la surface conductrice ou semi-conductrice, et restent donc liées au maintien d'un potentiel électrique. Un exemple de dépôt électro-suivi est l'électro-polymérisation qui utilise comme précurseurs, des monomères conducteurs tels que le pyrrole, l'aniline, le thiophène ou encore l'EDOT (Ethylene Di-Oxy Thiophène).

Dans le cadre de la présente invention, on préfère que l'électro-greffage du film organique polymère soit un greffage électro-initié, les Inventeurs ayant, en effet, constaté que ce type d'électro-greffage présente l'avantage : (i) de conduire à la formation de liaisons covalentes entre le film organique polymère et la surface conductrice ou semi-conductrice ; (ii) de permettre une localisation extrême du dépôt de polymère sur des zones choisies présentant un travail de sortie donné ; (iii) d'autoriser un contrôle très précis sur l'homogénéité d'épaisseur, même sur des topographies de chutes ohmiques très accidentées (surfaces rugueuses, surfaces ouvragées comportant des motifs à fort ratio d'aspect, ...).

Selon un premier mode de mise en oeuvre préféré du procédé selon l'invention, le film organique étant un film polymère, le précurseur est un monomère ou un prépolymère précurseur de ce film ou encore un mélange des deux.

Dans ce mode de mise en oeuvre préféré, l'électro-greffage du film polymère comprend, outre l'accrochage du précurseur de ce film à la surface conductrice ou semi-conductrice, des réactions de polymérisation en chaîne de ce précurseur. Ces réactions de polymérisation s'effectuent à partir des monomères et/ou prépolymères qui se sont accrochés à ladite surface sous l'effet du potentiel électrique, et aboutit à une croissance ou "pousse" de chaînes polymériques à partir de cette surface. Chaque chaîne polymérique ainsi constituée est donc liée de façon covalente à la surface conductrice ou semi-conductrice.

Lorsque le greffage est électro-initié, les monomères et prépolymères précurseurs du film organique peuvent être choisis, en premier lieu, parmi les composés organiques comprenant des groupements vinyliques, auquel cas l'électro-initiation consiste en une électro-réduction (ou une électro-oxydation), de ces monomères et/ou prépolymères, et ce sont les monomères et/ou prépolymères ainsi électro-réduits (ou électro-oxydés) qui initient les réactions de polymérisation, lesquelles sont, dans ce cas, anioniques (ou cationiques).

Peuvent être utilisés à cette fin, tous les composés monomères ou prépolymères, partiellement ou totalement fonctionnalisés par des groupements vinyliques, et notamment les monomères vinyliques comme l'acrylonitrile, le méthacrylonitrile, les acrylates et méthacrylates (acrylate et méthacrylate de méthyle, acrylate et méthacrylate d'éthyle, acrylate et méthacrylate de propyle, acrylate et méthacrylate de butyle, acrylate et méthacrylates d'hydroxyéthyle, acrylate et méthacrylate de glycidyle, le polyéthylène glycol diméthacrylate, l'acrylate et le méthacrylate de polydiméthylsiloxane), les acrylamides et méthacrylamides, les cyanoacrylates, l'acide acrylique et l'acide méthacrylique, le styrène, les halogénures de vinyle, la N-vinyl pyrrolidone, la 2-vinyl pyridine, la 4-vinyl pyridine et les composés téléchéliques à extrémités vinyliques.

Lorsque le greffage est électro-initié, les monomères et prépolymères peuvent également être choisis parmi les composés organiques comprenant des groupement cycliques clivables par une attaque nucléophile ou électrophile, auquel cas l'électro-greffage s'effectue selon le même principe que le précédent, mis à part le fait que la croissance des chaînes polymériques résulte de l'ouverture des cycles des monomères ou prépolymères.

Sont susceptibles d'être utilisés dans ce cas, tous les composés monomères ou prépolymères qui sont fonctionnalisés, partiellement ou totalement, par des groupements cycliques clivables par une attaque nucléophile ou électrophile, et notamment les époxydes, l'ε-caprolactone, la butyrolactone et les composés téléchéliques à extrémités cycliques clivables.

Selon un autre mode de mise en oeuvre préféré du procédé selon l'invention, le précurseur du film organique est choisi parmi les sels de diazonium, notamment les sels d'aryl diazonium, les sels de sulfonium, de phosphonium, d'iodonium et leurs mélanges, ces sels étant, de préférence, fonctionnalisés par des fragments macromoléculaires du type polyéthylène et autres polyoléfines, polyoxyde d'éthylène, et plus généralement tout oligomère ou polymère thermofusible.

Ces sels ont en commun que leur réduction conduit à des radicaux qui s'adsorbent sur la surface conductrice ou semi-conductrice et ne donnent lieu à aucune croissance de chaînes polymériques. Il s'agit donc d'un cas particulier d'un greffage électro-initié, dans lequel ce dernier est réduit à sa plus simple expression et permet de réaliser des films de très faibles épaisseurs, proches de la monocouche moléculaire.

Conformément à l'invention, il est également possible de réaliser l'électro-greffage du film organique en utilisant plusieurs précurseurs choisis parmi les différents types de précurseurs précédemment cités.

Quoi qu'il en soit, l'électro-greffage du film organique est, de préférence, obtenu en immergeant la surface conductrice ou semi-conductrice dans une solution renfermant le ou les précurseurs dudit film organique et en connectant cette surface à un potentiostat de manière à lui appliquer un ou plusieurs balayages de potentiel électrique, ces balayages pouvant être des balayages continus ou discontinus, sinusoïdaux ou en créneaux.

Une fois l'électro-greffage du film organique effectué, il peut être procédé à l'opération de soudage de la surface polymère avec la surface conductrice ou semi-conductrice, laquelle opération consiste, de préférence, en une thermofusion ou un collage ou encore en une combinaison thermofusion/collage.

La thermofusion peut être réalisée en appliquant une surface sur l'autre et en fournissant à l'assemblage résultant, éventuellement mis sous presse ou sous serrage, une énergie thermique, par exemple par chauffage ou par application d'un rayonnement électromagnétique, suffisante pour obtenir la fusion des deux surfaces en présence et, partant, leur interpénétration.

Une énergie thermique suffisante correspond par exemple, à une température supérieure à celle qui, des températures de transition vitreuse de la surface polymère devant être soudée et du film organique électro-greffé sur la surface conductrice ou semi-conductrice, est la plus élevée.

Pour ce qui concerne le collage, on utilise, de préférence, comme agent de collage, une substance, par exemple un solvant, qui est capable à la fois de dissoudre ou de gonfler la surface polymère devant être soudée et le film organique électro-greffé sur la surface conductrice ou semi-conductrice.

Ce collage peut être mis en oeuvre de différentes façons selon sa finalité. Ainsi, par exemple, le collage peut être réalisé en enduisant d'agent de collage la surface polymère et la surface conductrice ou semi-conductrice, puis en appliquant une surface sur l'autre et en séchant l'assemblage résultant, éventuellement sous pression réduite et/ou sous presse ou sous serrage.

Le polymère constituant la surface polymère devant être soudée peut être purement organique ou hybride (c'est-à-dire organique-inorganique), thermofusible ou thermoplastique pour autant que, dans ce dernier cas, il soit apte à être solubilisé ou gonflé par une substance qui est aussi un solvant ou un gonflant du matériau formant le film organique électro-greffé.

Par ailleurs, lorsque le film organique électro-greffé est lui-même un film polymère, le polymère constituant la surface polymère devant être soudée peut aussi bien être identique que différent du polymère constituant ce film organique.

Des polymères appropriés sont notamment les polyéthylènes, les polypropylènes, les polystyrènes, les polyacrylonitriles, les polysiloxanes, les polyesters comme l'acide polylactique et l'acide polyglycolique, les polyorthoesters, les polycaprolactones, les polybutyrolactones, les polyacryliques, les polyméthacryliques, les polyacrylamides, les résines époxydes, les résines ABS, le polychlorure de vinyle, le polycarbonate, le polytétrafluoroéthylène et les polyéthers perfluorés, les résines phénoplastes, les polyuréthannes, les résines époxy, leurs copolymères et leurs mélanges.

Les polymères thermofusibles - ou thermoplastiques - sont ceux que l'on préfère utiliser dans le cadre de la présente invention, même si les polymères thermodurcissables peuvent également constituer des candidats intéressants.

Quant au matériau susceptible de constituer la surface conductrice ou semi-conductrice, il peut être n'importe quel matériau connu pour présenter des propriétés conductrices ou semi-conductrices de l'électricité, comme les métaux (nobles ou non) et alliages métalliques, le silicium, le germanium ou encore l'arséniure de gallium.

Le procédé selon l'invention présente de nombreux avantages.

En effet, il offre, en premier lieu, la possibilité de souder un matériau polymère avec un matériau conducteur ou semi-conducteur, c'est-à-dire un matériau à très haut point de fusion pour lequel il n'existe généralement pas de gamme de températures autorisant une thermosoudure avec un polymère, les polymères étant pour la plupart décomposés aux températures de fusion des matériaux conducteurs et semi-conducteurs.

Il offre également la possibilité de souder un premier matériau conducteur ou semi-conducteur recouvert d'un film organique, électro-greffé ou non, avec un deuxième matériau conducteur ou semi-conducteur qui, lui, n'est pas recouvert d'un film organique. En effet, dans ce cas, il suffit de prétraiter la surface du deuxième matériau de manière à la recouvrir d'un film organique électro-greffé et de procéder ensuite à une opération de soudage des deux matériaux conducteurs ou semi-conducteurs comme décrit précédemment. En variante, l'opération de soudage peut être réalisée après avoir, non seulement électro-greffé un film organique sur la surface du deuxième matériau conducteur ou semi-conducteur, mais intercalé de plus un film polymère entre les films organiques formant les surfaces des deux matériaux conducteurs ou semi-conducteurs. Ainsi, lorsque le film organique formant la surface du premier matériau conducteur ou semi-conducteur est lui-même un film électro-greffé, ce sont deux soudures conformes à l'invention qui sont réalisées.

Dans tous les cas, il s'est avéré que les meilleurs résultats sont obtenus lorsque le film organique formant la surface du premier matériau conducteur ou semi-conducteur est un film électro-greffé, l'électro-greffage permettant, en effet, de disposer d'interfaces plus fortes que les autres méthodes actuellement disponibles pour former un film organique sur une surface.

Sur la base de ce qui précède, le procédé selon l'invention permet encore de souder ensemble deux matériaux conducteurs ou semi-conducteurs qui ne sont ni l'un, ni l'autre, recouvert d'un film polymère.

Notamment, il permet de réaliser une soudure entre deux matériaux ayant des températures de fusion très élevées - ce qui est notamment le cas des métaux, du silicium et du germanium - sans jamais recourir à une étape impliquant une telle température de fusion. Cet avantage peut s'avérer très utile lorsqu'il s'agit d'assembler deux zones conductrices ou semi-conductrices appartenant à des objets distincts et complexes, dont certaines zones sont thermosensibles. Il contribue, de plus, à réaliser des économies substantielles en matière de consommation énergétique puisqu'on remplace une opération de soudage devant être effectuée à des températures très élevées par une opération d'électro-greffage, qui est conduite à température ambiante, et une opération de thermofusion de deux matériaux organiques, qui nécessite des températures beaucoup plus faibles que la thermofusion de matériaux inorganiques, voire une opération de collage, qui s'effectue à froid.

Comme précédemment mentionné, le film organique électro-greffé sur la surface conductrice ou semi-conductrice peut être ou non constitué du même polymère que celui formant la surface polymère avec laquelle ladite surface conductrice ou semi-conductrice est prévue pour être soudée.

Dans le cas où il est identique, le procédé selon l'invention permet d'obtenir très facilement, sur un matériau conducteur ou semi-conducteur, des films épais à très épais, et en particulier des films macroscopiques (c'est-à-dire d'épaisseur supérieure à 500 µm) et très adhérents, alors que l'électro-greffage seul conduit à la formation de films dont l'épaisseur ne dépasse pas l'ordre du micron. Les films ainsi obtenus peuvent, par exemple, être des films plastiques réalisés par extrusion ou tout autre moyen, que l'on soude ensuite sur le matériau conducteur ou semi-conducteur préalablement électro-greffé par un film de la même nature.

Dans le cas où il est différent, le procédé selon l'invention permet d'obtenir, sur une surface conductrice ou semi-conductrice, un film polymère qui, normalement, n'aurait pu être électro-greffé sur cette surface ou qu'avec de sérieuses difficultés. En effet, l'électro-greffage est un processus complexe qui n'autorise pas le greffage de tous les polymères avec la même efficacité sur toutes les surfaces conductrices ou semi-conductrices. De plus, certains polymères comme ceux obtenus par polycondensation de monomères, se prêtent mal à un électro-greffage. Le procédé selon l'invention offre une solution à ce problème puisqu'il suffit d'électro-greffer, sur la surface conductrice ou semi-conductrice, un film polymère qui soit, à la fois, compatible avec celui dont on cherchait initialement à revêtir cette surface, et facile à électro-greffer sur ladite surface.

Dans tous les cas, le procédé selon l'invention permet de créer des liens d'adhésion très solides entre les surfaces soudées.

En plus de tous les avantages susmentionnés, le procédé selon l'invention présente encore d'autres avantages, et en particulier ceux :
- de ne nécessiter aucune modification, et notamment aucune fonctionnalisation, préalable de la surface polymère devant être soudée, ce qui, dans le cas d'un polymère biocompatible, supprime le risque de lui faire perdre ses propriétés de biocompatibilité,
- de n'utiliser aucun composé chimique autre que le précurseur du film organique électro-greffé et, le cas échéant, l'agent de collage, ce qui limite considérablement les risques de toxicité dans le cas d'applications biomédicales, et
- d'être simple à mettre en oeuvre et de n'exiger ni protocole opératoire, ni équipement complexe et coûteux.

De ce fait, il est susceptible de trouver de très nombreuses applications parmi lesquelles on peut citer la fabrication et la rénovation de matériaux composites destinés aux industries aérospatiale, aéronautique, automobile, biomédicale, électronique et des micro-systèmes, la fabrication de matériel médical et chirurgical implantable, l'assemblage d'éléments sensibles constitutifs des micro-systèmes et l'encapsulation (« packaging ») des micro-systèmes.

L'invention a aussi pour objet une structure comprenant deux objets dont l'un comporte une surface conductrice ou semi-conductrice de l'électricité et l'autre comporte une surface polymère, ces surfaces étant soudées l'une à l'autre par l'intermédiaire d'un film organique d'une épaisseur inférieure à 1 µm qui est électro-greffé sur ladite surface conductrice ou semi-conductrice de l'électricité.

Est également décrite une structure comprenant une surface conductrice ou semi-conductrice soudée à une surface polymère par l'intermédiaire d'un film organique, dans laquelle ledit film organique est lié à ladite surface conductrice ou semi-conductrice par des liaisons covalentes.

De telles structures sont, par exemple, des dispositifs médicaux ou chirurgicaux implantables comme des stents, des guides d'anévrisme, des guides de cathéter, des stimulateurs cardiaques, des prothèses de hanche, des électrodes d'implants cochléaires, des implants dentaires ou encore des électrodes d'électrophysiologie, ou bien des micro-systèmes comme des micro-capteurs.

Outre les dispositions qui précédent, l'invention comprend encore d'autres dispositions qui ressortiront du complément de description qui suit, qui se rapporte à des exemples de réalisation de soudures par le procédé selon l'invention et de leurs performances, et qui est donné à titre illustratif et non limitatif, en référence aux dessins annexés.

### Brève description des dessins

La figure 1 correspond à deux photographies, respectivement A et B, prises au microscope optique à deux grossissements différents (50x et 100x), et montrant une zone de contact entre un fil d'or et une lame d'or soudés par thermofusion selon l'invention.
La figure 2 correspond à deux photographies, respectivement A et B, montrant la zone de soudure d'un film de polystyrène et d'une lame d'acier inoxydable soudés par thermofusion selon l'invention.
La figure 3 est une photographie illustrant l'aptitude d'une soudure par thermofusion réalisée selon l'invention entre deux lames d'acier inoxydable, à résister à un écartement de ces lames.
La figure 4 représente les profils de relargage de pentoxifylline obtenus pour deux films d'acide polylactique (PLA) chargés respectivement à 20% et 40% (m/m) en pentoxifylline et soudés par collage selon l'invention sur des lames d'acier inoxydable (courbes 2 et 3), et celui obtenu pour un film de PLA chargé à 20% (m/m) en pentoxifylline et ayant été déposé sur une lame d'acier inoxydable (courbe 1).
La figure 5 représente le spectre obtenu en spectroscopie infra-rouge en réflexion (IRRAS) d'un film de poly-ortho ester (POE) déposé sur une lame d'acier inoxydable et présentant une épaisseur de 500 nm.
La figure 6 représente les profils d'érosion d'un film de POE soudé par collage selon l'invention sur une lame d'acier inoxydable (courbe 2) et d'un film de POE déposé sur une lame d'acier inoxydable (courbe 1).

### Exemple 1 : soudage par thermofusion d'un fil d'or sur une lame d'or

Dans une cellule électrochimique à trois électrodes, on dissout du méthacrylate de butyle (BuMA) dans une solution comprenant 5.10⁻² mol/l de perchlorate de tétraéthyl ammonium dans de la diméthyl formamide (DMF), à raison de 5 moles de méthacrylate de butyle par litre de solution.

On plonge ensuite dans cette solution une lame de verre recouverte d'une couche d'or évaporée. Cette lame est connectée à la borne de travail d'un potentiostat et sert d'électrode de travail. Les deux autres électrodes du dispositif sont une électrode de platine de grande dimension, qui sert de contre-électrode, ainsi qu'un fil d'argent, utilisé comme électrode de référence.

On applique ensuite à la lame d'or 10 balayages de potentiel en conditions voltamétriques, entre -0,1 et -2,6 V/(Ag⁺/Ag), à une vitesse de 100 mV/s. La lame est rincée à la DMF, puis à l'acétone, et enfin séchée sous courant d'argon. On obtient ainsi un film de polyméthacrylate de butyle (poly-BuMA) d'environ 50 nm d'épaisseur.

Le même traitement est appliqué à un fil d'or de 25 µm de diamètre et de 3 cm de long. On vérifie, par spectroscopie IRRAS, que le fil est effectivement recouvert de poly-BuMA, mais il est difficile de déterminer son épaisseur exacte.

Le fil est ensuite déposé sur la lame et maintenu à l'aide d'une pince de Mohr. L'ensemble est placé pendant une nuit dans une étuve chauffée à 200°C, ce qui représente une température bien inférieure à la température de fusion de l'or (1064,43°C).

Après refroidissement et retrait de la pince de Mohr, on constate qu'il est possible de soulever la lame d'or rien qu'en tenant le fil, ce qui prouve que la liaison établie entre cette lame et le fil est forte.

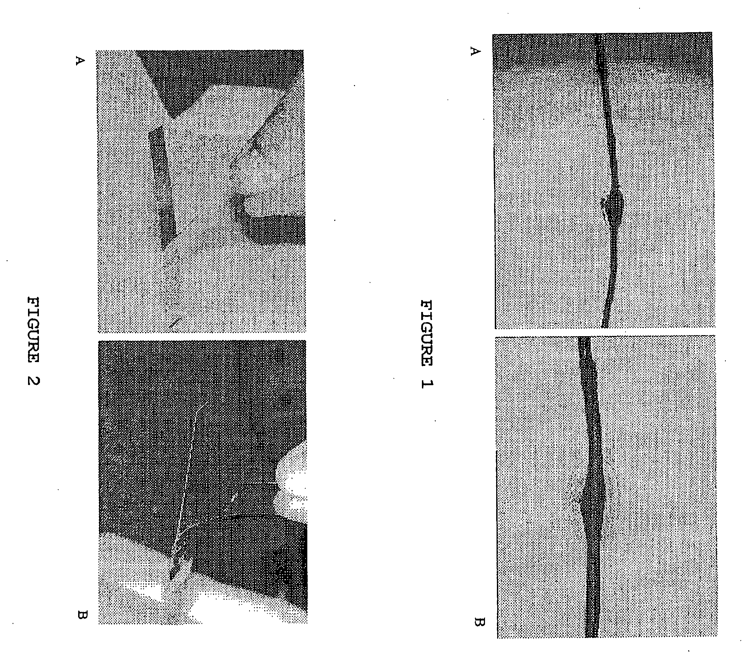

La figure 1 représente deux photographies prises au microscope optique au niveau de zones où la thermofusion entre le fil et la lame semble apparente, la photographie A correspondant à un grossissement de 50x et la photographie B correspondant à un grossissement de 100x.

Cette figure montre que le nombre de points d'ancrage est pourtant globalement assez faible, ce qui est probablement dû au fait que le fil n'étant pas rectiligne, il n'a pu être au contact de la lame sur toute sa longueur pendant le thermosoudage.

### Exemple 2 : soudage par thermofusion d'un film de polystyrène sur une plaque d'acier inoxydable

On trempe une lame d'acier inoxydable 316L de 10 cm de long sur 1 cm de large dans une solution à 3,125 mol/l de méthacrylate de méthyle (MMA), 10⁻² mol/l de tétrafluoroborate de 4-nitrophényl diazonium et à 2,5.10⁻² mol/l de nitrate de sodium dans la DMF. Cette lame sert d'électrode de travail dans un montage à trois électrodes analogue à celui utilisé dans l'exemple 1.

On soumet cette lame à une série de 50 balayages de potentiel en conditions voltamétriques, entre -0,1 et -3,0 V/(Ag⁺/Ag), à une vitesse de 100 mV/s. La lame est ensuite rincée à la DMF, puis à l'acétone, et enfin séchée sous courant d'azote. On obtient un film de polyméthacrylate de méthyle (poly-MMA) d'environ 300 nm d'épaisseur.

On applique ensuite un film de polystyrène de 10 cm de long sur 1 cm de large et 75 µm d'épaisseur sur la totalité de la lame ainsi traitée. Le film est pressé sur la lame au niveau de l'une de ses extrémités à l'aide d'une pince de Mohr, si bien que la zone pressée fait environ 2 cm de long sur 1 cm de large. L'ensemble est placé dans une étuve à 200°C pendant 2 jours.

Après refroidissement et retrait de la pince de Mohr, on constate que le film de polystyrène est soudé à la lame d'acier inoxydable. On constate notamment que l'on peut soulever la lame rien qu'en tenant l'assemblage par l'extrémité non soudée du film de polystyrène, comme illustré par les photographies A et B de la figure 2.

### Exemple 3 : soudage par thermofusion d'un film de polystyrène sur une plaque d'acier inoxydable

On effectue, selon le même protocole que celui décrit dans l'exemple 2, le soudage de films de polystyrène de 75 µm d'épaisseur sur des lames d'acier inoxydable 316L prétraitées par des films électro-greffés, respectivement de polyméthacrylonitrile (PMAN), de polyméthacrylate d'hydroxyéthyle (PHEMA) et de poly-ε-caprolactone (PCL), d'épaisseur comprises entre 300 et 500 nm.

On observe des résultats analogues à ceux rapportés dans l'exemple 2, à savoir que la soudure des films de polystyrène sur les lames est suffisamment forte pour que celles-ci puissent être soulevées en tenant les assemblages par l'extrémité non soudée de ces films.

### Exemple 4 : soudage par thermofusion de deux lames d'acier inoxydable 316L

On prétraite, de façon identique, deux lames d'acier inoxydable 316L de 10 cm de long sur 1 cm de large par un film de poly-MMA électro-greffé d'environ 300 nm d'épaisseur, selon un protocole semblable à celui décrit dans l'exemple 2.

On superpose les deux lames et on intercale entre elles, au niveau de l'une de leurs extrémités, un film de polystyrène de 2 cm de long sur 1 cm de large et 75 µm d'épaisseur. On pince le sandwich ainsi obtenu à l'aide d'un serre-joint, sur une aire mesurant environ 2 cm de long sur 1 cm de large.

L'ensemble est placé dans une étuve à 200°C pendant 2 jours.

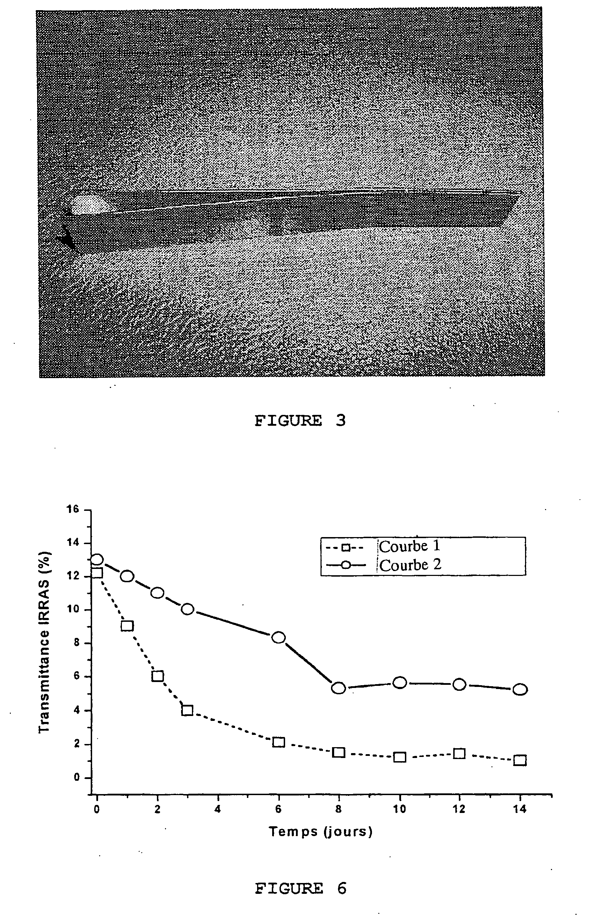

Après refroidissement et retrait du serre-joint, on observe que les deux lames sont soudées. On pose l'assemblage sur la tranche et on écarte les extrémités non soudées des deux lames. On insère dans l'espace ainsi ménagé une cale de manière à maintenir un écart d'1 cm entre les extrémités non soudées des lames. Comme visible sur la figure 3, on constate que la soudure n'est pas rompue par cette contrainte.

### Exemple 5 : soudage par collage d'un film d'acide polylactique sur une lame d'acier inoxydable 316L

Cet exemple illustre le bénéfice apporté par une soudure par collage, réalisée par le procédé selon l'invention, entre un film d'acide polylactique (PLA) et une surface en acier inoxydable 316L, sur la stabilité de l'interface résultant de ce collage.

Ce bénéfice est mis en évidence en soudant par collage deux films de PLA chargés, l'un à 20% (m/m), l'autre à 40% (m/m), en pentoxifylline sur deux lames d'acier inoxydable 316L préalablement traitées par un film de poly-BuMA électro-greffé, et en comparant la quantité de pentoxifylline relarguée par ces films, lorsque les lames sont maintenues plusieurs jours dans une solution aqueuse, à celle relarguée par un film de PLA chargé à 20% (m/m) de pentoxifylline, qui a été déposé sur une lame d'acier inoxydable 316L n'ayant pas été prétraitée par un film de poly-BuMA électro-greffé.

Pour ce faire, on réalise l'électro-greffage d'un film de poly-BuMA d'environ 300 nm d'épaisseur sur deux lames d'acier inoxydable 316L de 10 cm de long sur 1 cm de large, selon le même protocole opératoire que celui décrit dans l'exemple 2.

Par ailleurs, on prépare une solution d'acide polylactique [(acide poly(2-hydroxy-propionique))], de masse moléculaire en poids égale à 250.000 g/mol, à 10% (m/m) dans le chloroforme, ce dernier étant un solvant du PLA. A partir de cette solution, on prépare deux solutions de PLA, respectivement à 20 et 40% (m/m) de pentoxifylline. Après agitation de ces solutions pendant 2 heures, on dépose un film de PLA chargé à 20 ou 40% (m/m) de pentoxifylline sur les lames d'acier inoxydable recouvertes de poly-BuMA électro-greffé par trempage de ces lames dans lesdites solutions. Les films ainsi obtenus ont une épaisseur d'environ 3 µm. On soumet également une lame d'acier inoxydable 316L non prétraitée par un film de poly-BuMA électro-greffé à un trempage dans la solution à 20% (m/m) en pentoxifylline.

Les lames ainsi préparées sont mises dans une étuve à 40°C pendant 4h. Chacune d'entre elles est ensuite introduite chacune dans un récipient clos contenant une solution aqueuse de tampon PBS à pH 7,4, et placée dans un incubateur à 37°C sous agitation.

On effectue des prélèvements réguliers de la solution aqueuse dans laquelle baigne chaque lame, qui est simultanément renouvelée. Chaque prélèvement est extrait au chloroforme et la concentration de pentoxifylline présente dans la solution est déterminée par spectrométrie UV-visible en transmission à 278 nm.

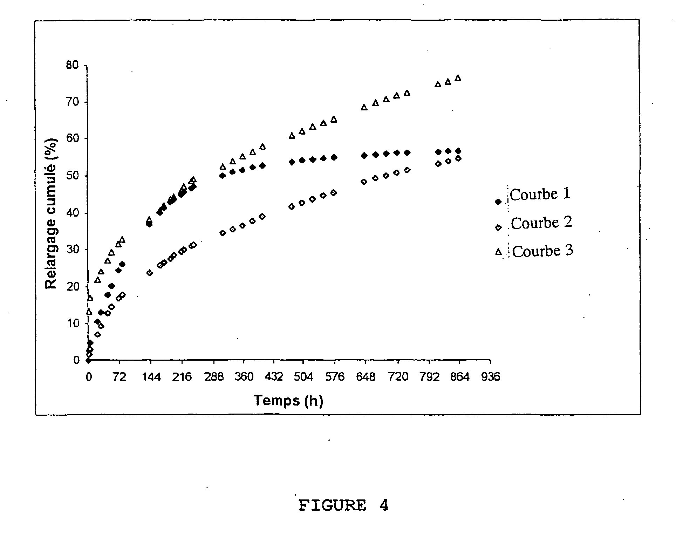

Les résultats obtenus sont illustrés sur la figure 4 dans laquelle l'axe des ordonnées représente la concentration cumulée (en pourcentages) en pentoxifylline relarguée, tandis que l'axe des abscisses représente le temps (en heures), les courbes 1, 2 et 3 correspondant respectivement :
- courbe 1 : au film de PLA chargé à 20% (m/m) de pentoxifylline déposé sur la lame d'acier inoxydable non prétraitée,
- courbe 2 : au film de PLA chargé à 20% (m/m) de pentoxifylline soudé sur l'une des deux lames d'acier inoxydable prétraitées par un film de poly-BuMA électro-greffé,
- courbe 3 : au film de PLA chargé à 20% (m/m) de pentoxifylline soudé sur l'une des deux lames d'acier inoxydable prétraitées par un film de poly-BuMA électro-greffé.

Cette figure montre que le relargage de la pentoxifylline par le film de PLA déposé sur la lame d'acier inoxydable non prétraitée est rapide, puisqu'un plateau est atteint dès 8 à 10 jours d'incubation, traduisant un arrêt de ce relargage. Une inspection de cette lame montre que le film de PLA s'est détaché par plaques et n'adhère pas sur la surface en acier inoxydable.

Les courbes 2 et 3 montrent, elles, qu'après une "bouffée" de relargage très rapide due à une diffusion de la pentoxifylline en excès, les profils de relargage de la pentoxifylline par les films de PLA soudés sur les lames d'acier inoxydable préalablement traitées par un film de poly-BuMa électro-greffé, deviennent linéaires et assurent une délivrance progressive de ce composé. Une inspection de ces lames ne montre, par ailleurs, aucune détérioration locale (écaillage par exemple) des films de PLA. Ceci signifie que l'interface PLA/poly-BuMA est suffisamment solide pour résister au milieu de relargage et suggère que le relargage serait seulement dû à une hydrolyse progressive du PLA au niveau de sa surface en contact avec la solution aqueuse.

Par ailleurs, cet exemple démontre que le procédé selon l'invention permet de fixer solidement, sur une surface métallique, un film d'un polymère biocompatible comme le PLA, sans avoir à modifier préalablement ce polymère - ce qui supprime tout risque d'en altérer la biocompatibilité - et d'inclure, de surcroît, une molécule fragile, très sensible à la chaleur et à la température comme la pentoxifylline, dans ce film.

Il en résulte que le procédé selon l'invention peut être très utile pour recouvrir du matériel médical ou chirurgical, et notamment des implants, par des matériaux biocompatibles, et en particulier par des matériaux destinés à libérer de façon contrôlée des substances biologiquement actives.

### Exemple 6 : soudage par collage d'un film de polyorthoester (POE) sur une lame d'acier inoxydable 316L

Cet exemple illustre également le bénéfice apporté par une soudure par collage, réalisée par le procédé selon l'invention, entre un film de polyorthoester (POE) et une surface en acier inoxydable 316L, sur la stabilité de l'interface résultant de ce collage.

Ce bénéfice est mis en évidence en soudant par collage un film de POE sur une lame d'acier inoxydable 316L préalablement recouverte d'un film de poly-BuMA électro-greffé et en comparant l'érosion de ce film, lorsque la lame est maintenue plusieurs jours dans une solution aqueuse de chlorure de sodium à 9 g/l à 37°C, par rapport à celle d'un film de POE déposé sur une lame d'acier inoxydable non prétraitée par un film de poly-BuMA électro-greffé.

Pour ce faire, on réalise l'électro-greffage d'un film de poly-BuMA d'environ 300 nm d'épaisseur sur une lame d'acier inoxydable 316L de 10 cm de long sur 1 cm de large selon le même protocole que celui décrit dans l'exemple 2.

Par ailleurs, on prépare un POE₉₅LA₅ (Mw : 60000, Mn : 38000, Tg :-14°C qui est un POE solide, comme décrit par M.B. SINTZEL et al. (Biomaterials, 19, 791, 1998) [15].

Puis, on prépare une solution de POE à 5% (m/m) dans le tétrahydrofuranne (THF), ce dernier étant en effet un solvant du POE et un gonflant du poly-BuMA. Par trempage dans cette solution, on dépose un film d'une épaisseur d'environ 500 nm de POE sur la lame d'acier inoxydable recouverte du film de poly-BuMA électro-greffé ainsi que sur une lame d'acier inoxydable non prétraitée par un film de poly-BuMA électro-greffé.

Les lames sont séchées dans une étuve à 40°C pendant 6h. Elles sont ensuite mises à incuber selon le même protocole que celui décrit dans l'exemple 5.

Régulièrement, les lames sont sorties, égouttées et séchées sous un courant d'argon, et on apprécie l'érosion des films de POE recouvrant ces lames en suivant l'évolution de la transmittance de la bande des groupements carbonyles du POE à 1745 cm⁻¹ telle que mesurée par spectroscopie IRRAS, en fonction du temps.

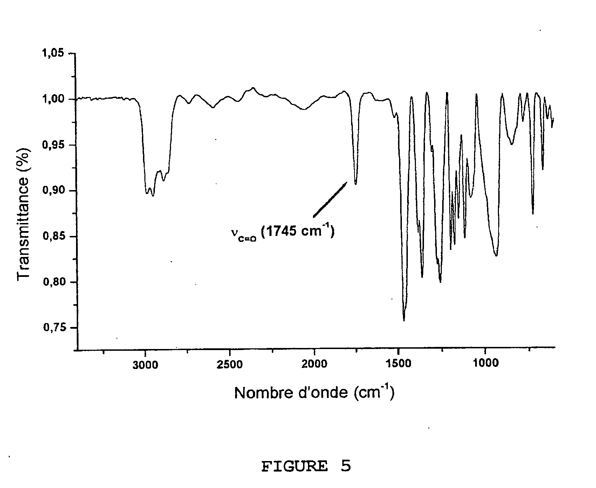

La figure 5, qui correspond au spectre IRRAS d'un film de POE de 500 nm d'épaisseur (soit l'épaisseur initiale des films de POE utilisés dans le présent exemple) déposé sur une lame d'acier inoxydable, montre la bande des groupements carbonyles du POE située au nombre d'onde 1745 cm⁻¹ et servant à suivre l'érosion des films de POE.

La figure 6, dont l'axe des ordonnées représente la transmittance (en pourcentages) de la bande des groupements carbonyles, tandis que l'axe des abscisses représente le temps (en jours), représente le profil d'érosion du film de POE soudé sur la lame d'acier inoxydable prétraitée par un film de poly-BuMa électro-greffé (courbe 2) et celui du film de POE déposé sur la lame d'acier inoxydable non prétraitée (courbe 1).

Cette figure montre que le film de POE déposé sur la lame d'acier inoxydable non prétraitée est relargué très rapidement de la surface de cette lame, ce qui est en accord avec une inspection de la lame qui révèle que ce film s'est décroché par plaques.

A l'inverse, on n'observe aucune détérioration du film de POE soudé par collage sur la lame prétraitée par un film de poly-BuMA électro-greffé. On note simplement qu'il disparaît progressivement par hydrolyse au contact de la solution aqueuse.

Ces résultats confirment, si besoin était, ceux précédemment obtenus dans l'exemple 5.

### DOCUMENTS CITES

- [1]: EP-A-1 110 946
- [2]: WO-A-00/51732
- [3]: FR-A-2 781 232
- [4]: E.P. PLUEDDMANN, in FUNDAMENTALS OF ADHESION, Ed. L.H. Lee, p. 269, Plenum Press, New-York, 1990
- [5]: US-A-6,022,597
- [6]: US-A-6,287,687
- [7]: US-A-4,421,569
- [8]: US-A-6,306,975
- [9]: WO-A-98/49206
- [10]: WO-A-99/16907
- [11]: EP-A-0 701 802
- [12]: WO-A-98/32474
- [13]: US-A-6,335,571
- [14]: FR-A-2 780 200
- [15]: M.B. SINTZEL et al., Biomaterials, 19, 791, 1998
- [16]: US-A-5,284,543
- [17]: X. Lou et al., Langmuir, 18, 2785-2788, 2002
- [18]: WO-A-02/098926

## Revendications

1. Procédé de soudage de deux objets entre eux dont l'un comporte une surface polymère et l'autre comporte une surface conductrice ou semi-conductrice de l'électricité, **caractérisé en ce qu'**il comprend :
a) l'électro-greffage d'un film organique sur la surface conductrice ou semi-conductrice, puis
b) une opération de soudage de la surface polymère avec la surface conductrice ou semi-conductrice ainsi greffée.

2. Procédé selon la revendication 1, **caractérisé en ce que** l'électro-greffage du film organique est un greffage électro-initié.

3. Procédé selon la revendication 2, **caractérisé en ce que** le film organique est un film polymère.

4. Procédé selon la revendication 3, **caractérisé en ce que** le film polymère est obtenu à partir de monomères et/ou prépolymères partiellement ou totalement fonctionnalisés par des groupements vinyliques.

5. Procédé selon la revendication 4, **caractérisé en ce que** le film polymère est obtenu à partir d'un monomère vinylique choisi parmi l'acrylonitrile, le méthacrylonitrile, les acrylates et méthacrylates, les acrylamides et méthacrylamides, les cyanoacrylates, l'acide acrylique et l'acide méthacrylique, le styrène, les halogénures de vinyle, la N-vinyl pyrrolidone, la 2-vinyl pyridine, la 4-vinyl pyridine et les composés téléchéliques à extrémités vinyliques.

6. Procédé selon la revendication 3, **caractérisé en ce que** le film polymère est obtenu à partir de monomères et/ou prépolymères partiellement ou totalement fonctionnalisés par des groupements cycliques clivables par une attaque nucléophile ou électrophile.

7. Procédé selon la revendication 2, **caractérisé en ce que** le film organique est obtenu à partir de sels de diazonium, de sulfonium, de phosphonium, d'iodonium et leurs mélanges.

8. Procédé selon l'une quelconque des revendications précédentes, **caractérisé en ce que** l'opération de soudage consiste en une thermofusion ou un collage ou une combinaison des deux.

9. Procédé selon la revendication 8, **caractérisé en ce que** le collage est réalisé au moyen d'une substance apte à dissoudre ou à gonfler la surface polymère à souder et le film organique électro-greffé sur la surface conductrice ou semi-conductrice.

10. Procédé selon l'une quelconque des revendications précédentes, **caractérisé en ce que** le polymère constituant la surface polymère est choisi parmi les polyéthylènes, les polypropylènes, les polystyrènes, les polyacrylonitriles, les polysiloxanes, les polyesters, les polyorthoesters, les polycaprolactones, les polybutyrolactones, les polyacryliques, les polyméthacryliques, les polyacrylamides, les résines époxydes, leurs copolymères et leurs mélanges.

11. Procédé selon l'une quelconque des revendications précédentes, **caractérisé en ce que** le polymère constituant la surface polymère est un polymère thermofusible.

12. Procédé selon l'une quelconque des revendications précédentes, **caractérisé en ce que** la surface polymère est un film polymère recouvrant un matériau conducteur ou semi-conducteur.

13. Application du procédé tel que défini dans l'une quelconque des revendications 1 à 12, à la fabrication ou la rénovation de matériaux composites destinés aux industries aérospatiale, aéronautique, automobile, biomédicale, micro-électronique et des micro-systèmes.

14. Application du procédé tel que défini dans l'une quelconque des revendications 1 à 12, à la fabrication de matériel médical et chirurgical implantable.

15. Application du procédé tel que défini dans l'une quelconque des revendications 1 à 12, à l'assemblage d'éléments sensibles constitutifs des micro-systèmes ou à l'encapsulation des micro-systèmes.

16. Structure comprenant deux objets dont l'un comporte une surface conductrice ou semi-conductrice de l'électricité et l'autre comporte une surface polymère, ces surfaces tant soudées l'une à l'autre par l'intermédiaire d'un film organique d'une épaisseur inférieure à 1 µm qui est électro-greffé sur ladite surface conductrice ou semi-conductrice de l'électricité.

## Claims

1. A method of bonding two objects together, one of which has a polymer surface and the other has an electrically conductive or semiconductive surface, which method is **characterized in that** it comprises:
a) the electrografting of an organic film onto the conductive or semiconductive surface; and then
b) an operation of bonding the polymer surface to the conductive or semiconductive surface thus grafted.

2. The method as claimed in claim 1, **characterized in that** the electrografting of the organic film is electroinitiated grafting.

3. The method as claimed in claim 2, **characterized in that** the organic film is a polymer film.

4. The method as claimed in claim 3, **characterized in that** the polymer film is obtained from monomers and/or prepolymers that are partly or completely functionalized by vinyl groups.

5. The method as claimed in claim 4, **characterized in that** the polymer film is obtained from a vinyl monomer chosen from acrylonitrile, methacrylonitrile, acrylates and methacrylates, acrylamides and methacrylamides, cyanoacrylates, acrylic acid and methacrylic acid, styrene, vinyl halides, N-vinylpyrrolidone, 2-vinylpyridine, 4-vinylpyridine and vinyl-terminated telechelic compounds.

6. The method as claimed in claim 3, **characterized in that** the polymer film is obtained from monomers and/or prepolymers that are partly or completely functionalized by cyclic groups that can be cleaved by nucleophilic or electrophilic attack.

7. The method as claimed in claim 2, **characterized in that** the organic film is obtained from diazonium, sulfonium, phosphonium or iodonium salts, or mixtures thereof.

8. The method as claimed in any one of the preceding claims, **characterized in that** the bonding operation consists of hotmelt bonding or cold bonding or a combination of the two.

9. The method as claimed in claim 8, **characterized in that** the cold bonding is carried out by means of a substance capable of dissolving or swelling the polymer surface to be bonded and the organic film electrografted onto the conductive or semiconductive surface.

10. The method as claimed in any one of the preceding claims, **characterized in that** the polymer constituting the polymer surface is chosen from polyethylenes, polypropylenes, polystyrenes, polyacrylonitriles, polysiloxanes, polyesters, polyorthoesters, polycaprolactones, polybutyrolactones, polyacrylics, polymethacrylics, polyacrylamides, epoxide resins, copolymers thereof and blends thereof.

11. The method as claimed in any one of the preceding claims, **characterized in that** the polymer constituting the polymer surface is a hotmelt polymer.

12. The method as claimed in any one of the preceding claims, **characterized in that** the polymer surface is a polymer film coating a conductive or semiconductive material.

13. The application of the method as defined in any one of claims 1 to 12, to the manufacture or renovation of composites intended for the aerospace, aeronautical, automotive, biomedical, microelectronics and microsystems industries.

14. The application of the method as defined in any one of claims 1 to 12, to the manufacture of implantable surgical and medical instruments.

15. The application of the method as defined in any one of claims 1 to 12, to the assembly of sensitive components of microsystems or to the packaging of microsystems.

16. A structure comprising two objects, one of which has an electrically conductive or semiconductive surface and the other has a polymer surface, these surfaces being bonded to each other via an organic film with a thickness of less than 1 µm which is electrografted on said electrically conductive or semiconductive surface.

## Patentansprüche

1. Verfahren zum Verschweißen von zwei Objekten miteinander, von denen eines eine Polymeroberfläche umfasst und das andere eine elektrisch leitende oder halbleitende Oberfläche umfaßt, **dadurch gekennzeichnet, dass** es umfaßt:
a) Elektropfropfen eines organischen Films auf die leitende oder halbleitende Oberfläche, und anschließend
b) einen Arbeitsschritt des Verschweißens der Polymeroberfläche mit der derart gepfropften leitenden oder halbleitenden Oberfläche.

2. Verfahren nach Anspruch 1, **dadurch gekennzeichnet, dass** das Elektropfropfen des organischen Films ein elektroinitiiertes Pfropfen ist.

3. Verfahren nach Anspruch 2, **dadurch gekennzeichnet, dass** der organische Film ein Polymerfilm ist.

4. Verfahren nach Anspruch 3, **dadurch gekennzeichnet, dass** der Polymerfilm ausgehend von Monomeren und/oder Präpolymeren erhalten wird, die partiell oder vollständig durch Vinylgruppen funktionalisiert sind.

5. Verfahren nach Anspruch 4, **dadurch gekennzeichnet, dass** der Polymerfilm ausgehend von einem Vinylmonomer erhalten wird, welches ausgewählt ist aus Acrylonitril, Methacrylonitril, den Acrylaten und Methacrylaten, den Acrylamiden und Methacrylamiden, den Cyanoacrylaten, Acrylsäure und Methacrylsäure, Styrol, den Vinylhalogeniden, N-Vinyl Pyrrolidon, 2-Vinylpyridin, 4-Vinylpyridin und den telechelischen Verbindungen mit Vinylenden.

6. Verfahren nach Anspruch 3, **dadurch gekennzeichnet, dass** der Polymerfilm ausgehend von Monomeren und/oder Präpolymeren erhalten wird, die partiell oder vollständig durch zyklische Gruppen funktionalisiert sind, welche durch einen nukleophilen oder elektrophilen Angriff spaltbar sind.

7. Verfahren nach Anspruch 2, **dadurch gekennzeichnet, dass** der organische Film erhalten wird ausgehend von Diazonium-, Sulfonium-, Phosphonium-, lodoniumsalzen und ihren Mischungen.

8. Verfahren nach einem der vorhergehenden Ansprüche, **dadurch gekennzeichnet, dass** der Arbeifisschritt des Verschweißens aus einer Thermofusion oder einer Verklebung oder einer Kombination der beiden besteht.

9. Verfahren nach Anspruch 8, **dadurch gekennzeichnet, dass** die Verklebung mit Hilfe einer Substanz durchgeführt wird, die dazu ausgelegt ist, die zu verschweißende Polymeroberfläche sowie den auf die leitende oder halbleitende Oberfläche elektrogepfropften organischen Film aufzulösen oder aufzublähen.

10. Verfahren nach einem der vorhergehenden Ansprüche, **dadurch gekennzeichnet, dass** das Polymer, welches die Polymeroberfläche bildet, ausgewählt ist aus den Polyethylenen, den Polypropylenen, den Polystyrolen, den Polyacrylonitrilen, den Polysiloxanen, den Polyestern, den Polyorthoestern, den Polycaprolaktonen, den Polybutyrolaktonen, den Polyacrylen, den Polymethacrylen, den Polyacrylamiden, den Epoxidharzen, ihren Copolymeren und ihren Mischungen.

11. Verfahren nach einem der vorhergehenden Ansprüche, **dadurch gekennzeichnet, dass** das Polymer, welches die Polymeroberfläche bildet, ein thermofusionsfähiges Polymer ist.

12. Verfahren nach einem der vorhergehenden Anspruche, **dadurch gekennzeichnet, dass** die Polymeroberfläche ein Polymerfilm ist, welcher ein leitendes oder halbleitendes Material bedeckt.

13. Anwendung des Verfahrens nach einem der Ansprüche 1 bis 12 auf die Herstellung oder die Erneuerung von Verbundmaterialien, die für die Luftfahrt-, die Raumfahrt-, die Automobil-, die Biomedizin-, die Mikroelektronik- und die Mikrosystem-Industrien bestimmt sind.

14. Anwendung des Verfahrens nach einem der Ansprüche 1 bis 12 auf die Herstellung von implantierbarem medizinischen und chirurgischen Material.

15. Anwendung des Verfahrens nach einem der Ansprüche 1 bis 12 auf den Zusammenbau empfindlicher Elemente als Bestandteil von Mikrosystemen oder auf die Einkapselung von Mikrosystemen.

16. Struktur mit zwei Objekten, von denen eines eine elektrisch leistende oder halbleitende Oberfläche umfasst und das andere eine Polymeroberfläche umfasst, wobei diese Oberflächen miteinander verschweißt sind mit Hilfe eines organischen Films mit einer Dicke von weniger als 1 µm, der auf die elektrisch leitende oder halbleitende Oberfläche elektrogepfropft ist.
